# EUROPEAN PATENT APPLICATION

(11) **EP 3 088 570 A2**
(43) Date of publication of application: **02.11.2016**
(21) Application number: 16151637.2
(22) Date of filing: 18.01.2016
(51) Int. Cl.: C25D 3/38

(54) **ACID COPPER ELECTROPLATING BATH AND METHOD FOR ELECTROPLATING LOW INTERNAL STRESS AND GOOD DUCTILITY COPPER DEPOSITS**

(30) Priority: 27.04.2015 US 201514697599
(71) Applicant: Rohm and Haas Electronic Materials LLC, Marlborough, MA 01752 (US)
(72) Inventor: WEI, Lingyun, Shrewsbury, Massachusetts 01545 (US); HAZEBROUCK, Rebecca, Uxbridge, Massachusetts 01539 (US); LIEB, Bryan, Salem, New Hampshire 03079 (US); KAO, Yu-Hua, Shrewsbury, Massachusetts 01545 (US); LEFEBVRE, Mark, Hudson, New Hampshire 03051 (US); CORONA, Robert A., Brighton, Massachusetts 02135 (US)
(74) Representative: Houghton, Mark Phillip

(57) **Abstract**

Acid copper electroplating baths provide improved low internal stress copper deposits with good ductility. The acid copper electroplating baths include one or more branched polyalkylenimines and one or more accelerators. The acid coper electroplating baths may be used to electroplate thin films on relatively thin substrates to provide thin film copper deposits having low internal stress and high ductility.

## Description

### Filed of the Invention

The present invention is directed to a copper electroplating bath for electroplating low internal stress copper deposits having good ductility. More specifically, the present invention is directed to a copper electroplating bath for electroplating low internal stress copper deposits having good ductility where the acid copper electroplating bath includes branched polyalkylenimines in combination with certain accelerators.

### Background of the Invention

Internal or intrinsic stress of electrodeposited metals is a well known phenomenon caused by imperfections in the electroplated crystal structure. After the electroplating operation such imperfections seek to self correct and this induces a force on the deposit to contract (tensile strength) or expand (compressive stress). This stress and its relief can be problematic. For example, when electroplating is predominantly on one side of a substrate it can lead to curling, bowing and warping of the substrate depending on the flexibility of the substrate and the magnitude of the stress. Stress can lead to poor adhesion of the deposit to the substrate resulting in blistering, peeling or cracking. This is especially the case for difficult to adhere substrates, such as semiconductor wafers or those with relatively smooth surface topography. In general, the magnitude of stress is proportional to deposit thickness thus it can be problematic where thicker deposits are required or indeed may limit the achievable deposit thickness.

Most metals including copper deposited from an acid electroplating process exhibits internal stress. Commercial copper acid electroplating processes utilize various organic additives which beneficially modify the electroplating process and deposit characteristics. It is also known that deposits from such electroplating baths may undergo room temperature self annealing. Transformation of the grain structure during such self annealing concurrently results in a change in the deposit stress, often increasing it. Not only is internal stress problematic in itself but is typically subject to change on aging as the deposit self anneals with time resulting in unpredictability.

The fundamental mechanism of alleviating intrinsic stress in copper electroplating is not well understood. Parameters, such as reducing deposit thickness, lowering current density, i.e., plating speed, substrate type, seed layer or under plate selection, electroplating bath composition, such as anion type, additives, impurities and contaminants are known to affect deposit stress. Such empirical means of reducing stress have been employed though typically are not consistent or compromise the efficiency of the electroplating process.

Another important parameter of copper deposits is their ductility. Ductility may be defined as a solid materials ability to deform under tensile stress. Copper deposits with high ductility are desired to prevent or reduce the potential for the copper to crack under tensile stress over time. Ideally, a copper deposit has a relatively low internal stress and a high ductility; however, there is typically a tradeoff between internal stress and ductility. Accordingly, there is still a need for a copper electroplating bath and method which alleviates internal stress in copper deposits as well as providing good or high ductility.

### Summary of the Invention

An acid copper electroplating baths includes one or more sources of copper ions, an electrolyte, one or more branched polyalkylenimines, one or more accelerators and one or more suppressors.

Methods include contacting a substrate with an acid copper electroplating bath comprising one or more sources of copper ions, an electrolyte, one or more branched polyalkylenimines, one or more accelerators and one or more suppressors; and electroplating low internal stress and high ductility copper on the substrate.

The acid copper deposits are of low internal stress with relatively large grain structure. In addition, the internal stress and grain structure do not substantially change as the deposit ages, thus increasing predictability of the performance of the deposit. The low internal stress copper deposits have good or high ductility as well such that the copper deposits do not readily crack on substrates in contrast to many conventional copper deposits. The copper electroplating baths may be used to deposit copper films on relatively thin substrates without substantial concern that the thin substrates may bow, curl, warp, blister, peel or crack.

### Detailed Description of the Invention

The following abbreviations have the following meanings unless the context clearly indicates otherwise: °C = degrees Celsius; g = grams; mL = milliliter; L = liter; ppm = parts per million = mg/L; A = amperes = Amps; DC = direct current; dm = decimeter; mm = millimeter; µm = micrometers; nm = nanometers; Mw = weight average molecular weight; SEM = scanning electron micrograph; ASD = A/dm²; 2.54 cm = 1 inch; lbf = pound-force = 4.44822162 N; N = newtons; psi = pounds per square inch = 0.06805 atmospheres; 1 atmosphere = 1.01325x10⁶ dynes/square centimeter; and RFID = radio frequency identification.

As used throughout this specification, the terms "depositing", "plating" and "electroplating" are used interchangeably. The term "moiety" means a part or a functional group of a molecule. The moiety 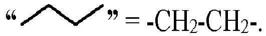 Indefinite articles "a" and "an" include both the singular and the plural. The term "ductility" means a solid material's ability to deform under tensile stress. The term "tensile stress" means the maximum stress a material withstands before failing.

All percentages and ratios are by weight unless otherwise indicated. All ranges are inclusive and combinable in any order except where it is clear that such numerical ranges are constrained to add up to 100%.

Copper metal is electroplated from low stress and high ductility acid copper baths which include one or more sources of copper ions, an electrolyte, one or more branched polyalkylenimines, one or more accelerators and one or more suppressors such that the copper deposits have low internal stress and high ductility, preferably minimal change in stress as the copper deposit ages and high ductility. The low internal stress copper deposits may have a matt appearance with a relatively large as deposited grain size, typically of 2 microns or more. The acid, low stress, high ductility copper baths also may include one or more sources of chloride ions and one or more conventional additives typically included in acid copper electroplating baths. Preferably, one or more sources of chloride ions are included in the acid copper electroplating baths.

The one or more branched polyalkylenimines include, but are not limited to compounds having a general formula: 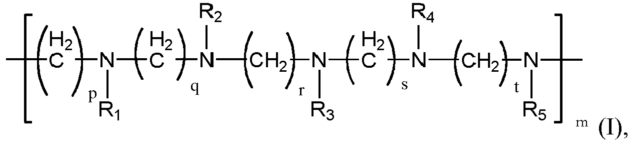 where R₁, R₂, R₃, R₄ and R₅ may be hydrogen or a moiety having a general formula: 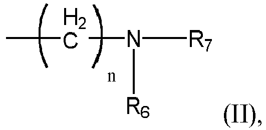 where R₆ and R₇ are the same or different and are hydrogen or a moiety having a general formula: 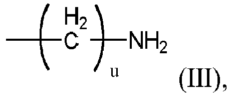 with the proviso that at least one of R₁, R₂, R₃, R₄ and R₅ is the moiety having formula (II) and n, p, q, r, s, t and u are the same or different and are integers of 2 to 6 and m is an integer of 2 or greater. Preferably, at least two of R₁, R₂, R₃, R₄ and R₅ are the moiety having formula (II), more preferably three of R₁, R₂, R₃, R₄ and R₅ are the moiety having formula (II). Preferably, at least one of R₆ and R₇ is the moiety having formula (III) with the remainder being hydrogen. Preferably, the variables n, p, q, r, s, t and u are the same or different and are 2 to 3, more preferably, n, p, q, r, s, t and u are 2.

Examples of preferred branched polyalkylenimines are the following polyethylenimines: 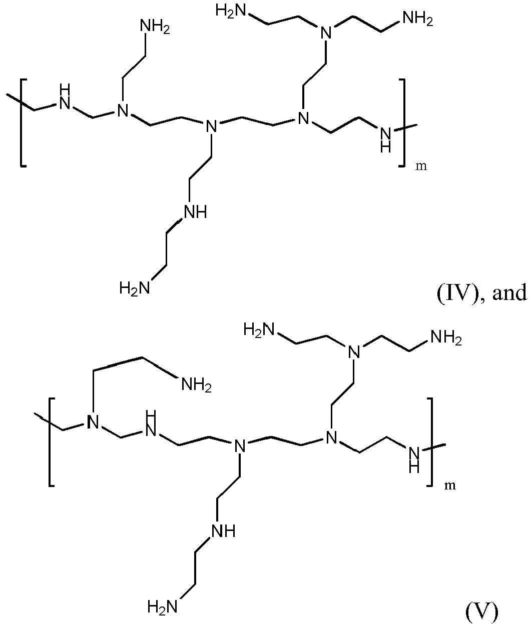 where the variable m is as defined above.

An example of another branched polyalkylenimine is the dendrimer having the following structure:

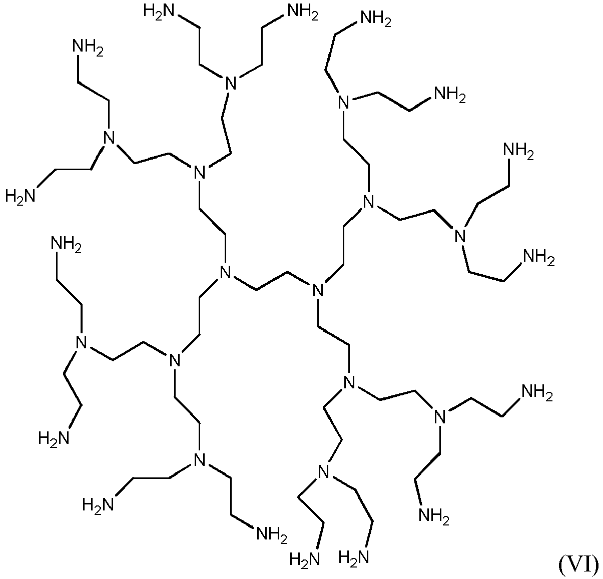

The branched polyalkylenimines are included in the acid copper electroplating baths in amounts of 0.1 to 10 ppm, preferably from 0.1 to 5 ppm, more preferably from 0.1 to 2 ppm and most preferably 0.1 to 1 ppm. The preferred and the most preferred branched polyalkylenimines may be included in the low stress, high ductility acid copper electroplating baths in amounts of 0.2 ppm to 0.8 ppm.

In general Mw may range from 1000 and greater. Typically the Mw may range from 4000 to 60,000, more typically from 10,000 to 30,000.

One or more accelerators are included in the low stress and high ductility acid copper electroplating baths. Accelerators are preferably compounds which in combination with one or more suppressors may lead to an increase in plating rate at given plating potentials. The accelerators are preferably sulfur containing organic compounds. Preferably the accelerators are 3-mercapto-1-propane sulfonic acid, ethylenedithiodipropyl sulfonic acid, bis-(ω-sulfobutyl)-disulfide, methyl-(ω-sulfopropyl)-disulfide, N,N-dimethyldithiocarbamic acid (3-sulfopropyl) ester, (O-ethyldithiocarbonato)-S-(3-sulfopropyl)-ester, 3-[(amino-iminomethyl)-thiol]-1-propanesulfonic acid, 3-(2-benzylthiazolylthio)-1-propanesulfonic acid, bis-(sulfopropyl)-disulfide and alkali metal salts thereof. More preferably, the accelerator is chosen from 3-mercapto-1-propane sulfonic acid and its alkali metal salts and (O-ethyldithiocarbonato)-S-(3-sulfopropyl)-ester and its alkali metal salts. Most preferably, the accelerator is chosen from 3-mercapto-1-propane sulfonic acid, sodium salt and (O-ethyldithiocarbonato)-S-(3-sulfopropyl)-ester, potassium salt. While not being bound by theory, it is believed that the one or more accelerators in combination with the one or more branched polyalkylenimines enable the combination of a low internal stress and high ductility copper metal film deposit.

In general, such accelerators may be included in amounts of 1ppm and greater. Preferably such accelerators may be included in the acid copper electroplating baths in amounts of 2 ppm to 500 ppm, more preferably from 2 ppm to 250 ppm, most preferably the accelerators are included in amounts of 3 ppm to 200 ppm. When the accelerators are chosen from 3-mercapto-1-propane sulfonic acid and its alkali metal salts they are most preferably included in amounts of 3 ppm to 8 ppm, and (O-ethyldithiocarbonato)-S-(3-sulfopropyl)-ester and its alkali metal salts are most preferably included in amounts of 100 ppm to 200 ppm.

Suppressors included in the low stress, high ductility acid copper electroplating baths include, but are not limited to, polyoxyalkylene glycols, carboxymethylcellulose, nonylphenolpolyglycol ether, octandiolbis-(polyalkylene glycolether), octanolpolyalkylene glycol ethers, oleic acidpolyglycol ester, polyethylenepropylene glycol, polyethylene glycol, polyethylene glycoldimethylether, polyoxypropylene glycol, polypropylene glycol, polyvinylalcohol, stearic acid polyglycol ester and stearyl alcohol polyglycol ether. Such suppressors are included in amounts of 0.1 g/L to 10 g/L, preferably from 0.1 g/L to 5 g/L, more preferably from 0.1 g/L to 2 g/L and most preferably from 0.1 g/L to 1.5 g/L.

Suitable copper ion sources are copper salts and include without limitation: copper sulfate; copper halides such as copper chloride; copper acetate; copper nitrate; copper tetrafluoroborate; copper alkylsulfonates; copper aryl sulfonates; copper sulfamate; copper perchlorate and copper gluconate. Exemplary copper alkane sulfonates include copper (C₁-C₆)alkane sulfonate and more preferably copper (C₁-C₃)alkane sulfonate. Preferred copper alkane sulfonates are copper methanesulfonate, copper ethanesulfonate and copper propanesulfonate. Exemplary copper arylsulfonates include, without limitation, copper benzenesulfonate and copper p-toluenesulfonate. Mixtures of copper ion sources may be used. One or more salts of metal ions other than copper ions may be added to the acid copper electroplating baths. Typically, the copper salt is present in an amount sufficient to provide an amount of copper ions of 10 to 400 g/L of plating solution. The electroplating baths do not include any alloying metals. The electroplating baths are directed to thin film copper deposits, not copper alloy deposits or any other metal or metal alloy.

Suitable electrolytes include, but are not limited to, sulfuric acid, acetic acid, fluoroboric acid, alkanesulfonic acids such as methanesulfonic acid, ethanesulfonic acid, propanesulfonic acid and trifluoromethane sulfonic acid, aryl sulfonic acids such as benzenesulfonic acid, p-toluenesulfonic acid, sulfamic acid, hydrochloric acid, hydrobromic acid, perchloric acid, nitric acid, chromic acid and phosphoric acid. Mixtures of acids may be used in the present metal plating baths. Preferred acids include sulfuric acid, methanesulfonic acid, ethanesulfonic acid, propanesulfonic acid, hydrochloric acid and mixtures thereof. The acids may be present in an amount in the range of 1 to 400 g/L. Electrolytes are generally commercially available from a variety of sources and may be used without further purification.

One or more optional additives may also be included in the electroplating composition. Such additives include, but are not limited to, levelers, surfactants, buffering agents, pH adjustors, sources of halide ions, organic acids, chelating agents and complexing agents. Such additives are well known in the art and may be used in conventional amounts.

Levelers may be included in the acid copper electroplating bath. Such levelers include, but are not limited to, organic sulfo sulfonates such as 1-(2-hydroxyethyl)-2-imidazolidinethione (HIT), 4-mercaptopyridine, 2-mercaptothiazoline, ethylene thiourea, thiourea, those disclosed in U.S. Pat. Nos. 6,610,192 to Step et al., 7,128,822 to Wang et al., 7,374,652 to Hayashi et al. and 6,800,188 to Hagiwara et al. Such levelers may be included in conventional amounts. Typically they are included in amounts of 1ppb to 1 g/L.

Conventional nonionic, anionic, cationic and amphoteric surfactants may be included in the acid copper electroplating baths. Such surfactants are well known in the art and many are commercially available. Typically the surfactants are nonionic. In general, surfactants are included in conventional amounts. Typically they may be included in the electroplating baths in amounts of 0.05 g/l to 15 g/L.

Halogen ions include chloride, fluoride, and bromide. Such halides are typically added into the bath as a water soluble salt or acid. Preferably, the copper electroplating baths include chloride. Chloride is preferably introduced into the bath as hydrochloric acid or as sodium chloride or potassium chloride. Preferably chloride is added to the bath as hydrochloric acid. Halogens may be included in the baths in amounts of 20 ppm to 500 ppm, preferably 20 ppm to 100 ppm.

The low stress, high ductility acid copper electroplating baths have a pH range less than 1 to less than 7, preferably from less than 1 to 5, more preferably from less than 1 to 2, most preferably the pH is less than 1 to 1.

Electroplating may be by DC plating, pulse plating, pulse reverse plating, light induced plating (LIP) or light assisted plating. Preferably the low stress, high ductility copper films are plated by DC, LIP or light assisted plating. In general, current density ranges from 0.5-50 ASD depending on the application. Typically, the current density ranges from 1-20 ASD or such as 15-20 ASD. Electroplating is done at temperature ranges from 15 °C to 80 °C or such as from room temperature to 60 °C or such as from 20 °C to 40 °C or such as from 20 °C to 25 °C.

The internal stress and ductility of the copper films may be determined using conventional methods. Typically low internal stress is measured using a deposit stress analyzer, such as is available from Specialty Testing and Development Co., Jacobus, PA. The low internal stress may be determined by the equation S=U/3TxK, where S is stress in psi, U is number of increments of deflection on a calibrated scale, T is deposit thickness in inches and K is the test strip calibration constant. The constant may vary and is provided with the deposit stress analyzer. Low internal stress is measured immediately after plating and then after ageing for a few days, preferably two days after the copper film is deposited on a substrate, such as a conventional copper/beryllium alloy test strip. Internal stress measurements immediately after electroplating and after ageing are made at room temperature. While room temperature may vary, for purposes of measuring internal stress, room temperature typically ranges from 18 °C to 25 °C, preferably from 20 °C to 25 °C. Preferably, a copper film of 1-10 µm is plated on the test strip, more preferably 1-5 µm. Initial internal stress which is measured immediately after plating copper on the substrate may range from 0 psi to 950 psi, preferably from 0 psi to 520 psi, more preferably from 0 psi to 505 psi at room temperature. After ageing, such as for two days, the internal stress may range from 300 psi to 900 psi, preferably from 300 psi to 850 psi, more preferably from 300 psi to 800 psi at room temperature. While internal stress may vary slightly from the two days ageing time period, the measurement of the internal stress of a copper film typically does not significantly change at room temperature after the two day ageing period.

Ductility is measured using conventional elongation tests and apparatus. Preferably, elongation testing is done using industrial standard IPC-TM-650 methods with an apparatus such as an Instron pull tester 33R4464. Copper is electroplated on a substrate such as a stainless steel panel. Typically copper is electroplated as a thin film on the substrate to a thickness of 50-100 µm, preferably from 60-80 µm. The copper is peeled from the substrate and annealed for 1- 5 hours, preferably from 2-5 hours. Annealing is done at temperatures of 100-150 °C, preferably from 110-130 °C, and then the copper is allowed to come to room temperature. Elongation or load of maximum tensile stress is typically not a pre-set parameter. The greater the load of maximum tensile stress a material can withstand before failing, the higher or the better the ductility. Typically elongation is done at loads of maximum tensile stress of 50 lbf or greater. Preferably, elongation is done at 60 lbf or greater. More preferably elongation is done at loads of maximum tensile stress of 60 lbf to 85 lbf. Elongation ranges from greater than or equal to 8%, typically from 8% to 12%.

The low stress, high ductility acid copper electroplating baths and methods are used to plate copper on relatively thin substrates such as semiconductor wafers of 100-220 µm or such as from 100-150 µm, or on sides of substrates where bowing, curling or warping are problems. The low stress, high ductility acid copper electroplating baths may also be used to plate copper on difficult to adhere to substrates where blistering, peeling or cracking of the deposit are common. For example, the methods may be used in the manufacture of printed circuit and wiring boards, such as flexible circuit boards, flexible circuit antennas, RFID tags, electrolytic foil, semiconductor wafers for photovoltaic devices and solar cells, including interdigitated rear contact solar cells, heterojunction with intrinsic thin layer (HIT) cells and fully plated front contact cells. The acid copper electroplating baths are used to preferably plate copper at thickness ranges of 1µm to 5mm, more preferably from 5µm to 1 mm. When copper is used as the principle conductor in the formation of contacts for solar cells, the copper is preferably plated to thickness ranges of 1 µm to 60µm, more preferably from 5µm to 50µm.

The copper deposits are of low internal stress with relatively large grain structure. In addition, the internal stress and grain structure do not substantially change as the deposit ages, thus increasing predictability of the performance of the deposit. The low internal stress copper deposits have good ductility as well such that they do not readily crack on substrates in contrast to many conventional copper deposits. The copper electroplating baths may be used to deposit copper on relatively thin substrates without substantial concern that the substrate may bow, curl, warp, blister, peel or crack.

The following examples are provided to illustrate the invention, but are not intended to limit its scope.

### Example 1

The following aqueous acid copper electroplating baths were prepared at room temperature.

**Table**

| Component | Bath 1 | Bath 2 | Bath 3 | Bath 4 |
|---|---|---|---|---|
| Copper sulfate | 160g/L | 160g/L | 160g/L | 160g/L |
| Sulfuric acid | 150g/L | 150g/L | 150g/L | 150g/L |
| Chloride (as hydrochloric acid) | 60ppm | 60ppm | 60ppm | 60ppm |
| Bis-sodium sulfopropyl-disulfide | 4ppm | 0 | 4ppm | 4ppm |
| 3-mercapto-1-propane sulfonic acid, sodium salt | 6ppm | 0 | 6ppm | 0 |
| (O-Ethyldithiocarbonato)-S-(3-sulfopropyl)-ester, potassium salt | 0 | 150ppm | 0 | 0 |
| Polyoxy-alkylene glycol¹ | 0.15 g/L | 0.9 g/L | 0.15 g/L | 0.15 g/L |
| Polyethylene glycol² | 0.18 g/L | 1.1 g/L | 0.18 g/L | 0.18 g/L |
| Branched polyethylenimine (Mw = 25000) | 0.75ppm | 0.75ppm | 0 | 0 |

| | | | | |
|---|---|---|---|---|
| ¹PolyMax™ PA-66/LC (available from Heritage plastics, Inc. Picayune, MS) ²PEG 12000 | | | | |

The components of the copper electroplating baths were made up using conventional laboratory procedures where organics were added to water followed by adding the inorganic components. Stirring or agitation with heat application at temperatures of below 30 °C was done to be certain that all of the components were solubilized in the water. The baths were allowed to come to room temperature prior to copper electroplating. The pH of the acid copper electroplating baths ranged from less than 1 to 1 at room temperature and during copper electroplating.

### Example 2

Two flexible copper/beryllium alloy foil test strips were coated on one side with a dielectric to enable single sided plating on the uncoated side. The test strips were taped to a support substrate with platers tape and placed in a haring cell containing an acid copper plating bath having the formulation of Bath 1. The bath was at room temperature. A copper metal strip was used as an anode. The test foil strips and anode were connected to a rectifier. The test foil strips were copper plated at an average current density of 2 ASD to deposit a copper thickness of five µm on the uncoated side of each strip. After plating was completed the test strips were removed from the haring cell, rinsed with wafer, dried and the platers tape was removed from the test strips. The test strips were inserted at one end into screw clamps of a deposit stress analyzer (available from Specialty Testing and Development Co., Jacobus, PA). The test strips were at room temperature. The internal stress of the copper deposits on the strips was determined to be 0 psi. The stress was determined using the equation S=U/3TxK, where S is stress in psi, U is number of increments of deflection on the calibrated scale, T is deposit thickness in inches and K is the test strip calibration constant. After test strips aged for 2 days, the internal stress for each strip was determined to be 440 psi.

An elongation test was also performed to determine ductility using industrial standard IPC-TM-650 methods. 75 µm of copper was plated on a stainless steel panel at 3.8 ASD from Bath 1. The copper film was peeled off after plating and annealed for 4 hours at 125 °C in a conventional convection oven. The pull test was done on an Instron pull tester 33R4464 with the copper at room temperature. Elongation for the copper film from the bath was 11%, and load at maximum tensile stress was 82 lbf. The results showed that the internal stress was low and the ductility was high for the copper deposit.

### Example 3

Two flexible copper/beryllium alloy foil test strips were coated on one side with a dielectric to enable single sided plating on the uncoated side. The test strips were taped to a support substrate with platers tape and placed in a haring cell containing an acid copper plating bath having the formulation of Bath 2. The bath was at room temperature. A copper metal strip was used as an anode. The test foil strips and anode were connected to a rectifier. The test foil strips were copper plated at an average current density of 2 ASD to deposit copper at a thickness of five µm on the uncoated side of each strip. After plating was completed the test strips were removed from the haring cell, rinsed with wafer, dried and the platers tape was removed from the test strips. The test strips were inserted at one end into screw clamps of the deposit stress analyzer. The internal stress of the copper deposit on the strips was determined to be 503 psi. The stress was determined using the equation S=U/3TxK, where S is stress in psi, U is number of increments of deflection on the calibrated scale, T is deposit thickness in inches and K is the test strip calibration constant. After the test strips aged for 2 days, the internal stress for each strip was determined to be 760 psi.

An elongation test was also performed using industrial standard IPC-TM-650 methods. 75 µm thick copper was plated on a stainless steel panel at 3.8ASD. The copper film was peeled off after plating and annealed for 4 hours at 125 °C. The pull test was done on the Instron pull tester 33R4464. Elongation for copper plated from Bath 2 was 8.3 %, and load at maximum tensile stress was 78 lbf. Although the internal stress was higher than the copper film plated with Bath 1, the results still showed low internal stress and high ductility.

### Example 4 (comparative)

Two flexible copper/beryllium alloy foil test strips were coated on one side with a dielectric to enable single sided plating on the uncoated side. The test strips were taped to a support substrate with platers tape and placed in a haring cell containing acid copper plating Bath 3. The bath was at room temperature. A copper metal strip was used as an anode. The test foil strips and anode were connected to a rectifier. The test foil strips were copper plated at an average current density of 2 ASD to deposit a copper thickness of five µm on the uncoated side of each strip. After plating was completed the test strips were removed from the haring cell, rinsed with wafer, dried and the platers tape was removed from the test strips. The test strips were inserted at one end into screw clamps of the deposit stress analyzer. The internal stress of the copper deposit on the strips was determined to be 211 psi. The stress was determined using the equation S=U/3TxK, where S is stress in psi, U is number of increments of deflection on the calibrated scale, T is deposit thickness in inches and K is the test strip calibration constant. After the test strips aged for 2 days, the stress for each strip was determined to be 299 psi.

An elongation test was also performed using industrial standard IPC-TM-650 methods. 75 µm copper was plated on a stainless steel panel at 3.8 ASD. The copper film was peeled off after plating and annealed for 4 hours at 125 °C. The pull test was done on the Instron pull tester 33R4464. Elongation for the copper plated from Bath 3 was 7 %, and load at maximum tensile stress was only 50 lbf. Although the internal stress was low, the ductility of the copper was not as high as in Baths 1 and 2 which included the branched polyethylenimine. Bath 3 was an example of a conventional acid copper electroplating bath which typically electroplates copper film where internal stress is low; however, ductility is undesirably low.

### Example 5 (comparative)

Two flexible copper/beryllium alloy foil test strips were coated on one side with a dielectric to enable single sided plating on the uncoated side. The test strips were taped to a support substrate with platers tape and placed in a haring cell containing acid copper plating Bath 4 in the Table of Example 1. The bath was at room temperature. A copper metal strip was used as an anode. The test foil strips and anode were connected to a rectifier. The test foil strips were copper plated at an average current density of 2 ASD to deposit copper at a thickness of 5 µm on the uncoated side of each strip. After plating was completed the test strips were removed from the haring cell, rinsed with wafer, dried and the platers tape was removed from the test strips. The test strips were inserted at one end into screw clamps of the deposit stress analyzer. The internal stress of the copper deposit on the strips was determined to be 1156 psi. The stress was determined using the equation S=U/3TxK, where S is stress in psi, U is number of increments of deflection on the calibrated scale, T is deposit thickness in inches and K is the test strip calibration constant. After test strips aged for 2 days, the stress for each strip was determined to be 1734 psi.

An elongation test was also performed using industrial standard IPC-TM-650 methods. 75 µm of copper was plated on a stainless steel panel at 3.8 ASD. The copper film was peeled off after plating and annealed for 4 hours at 125 °C. The pull test was done on the Instron pull tester 33R4464. Elongation for the coper deposit from Bath 4 was 16 %, and load at maximum tensile stress was 62 lbf. While ductility was good for the copper film plated from Bath 4, internal stress exceeded 1000 psi which was poor. Bath 4 was another example of a conventional acid copper electroplating where when internal stress is high, ductility is good.

### Example 6 (comparative)

Two flexible copper/beryllium alloy foil test strips were coated on one side with a dielectric to enable single sided plating on the uncoated side. The test strips were taped to a support substrate with platers tape and placed in a haring cell containing acid copper plating bath similar to Bath 1 except the branched polyethylenimine was replaced with 0.75 ppm of a linear polyethylenimine with a Mw = 2000 and having a general formula: 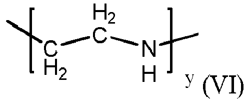 where y is an integer such that the weight average molecular weight of the linear polyethylenimine is around 2000.

A copper metal strip was used as an anode. The test foil strips and anode were connected to a rectifier. The test foil strips were copper plated at an average current density of 2 ASD to deposit a copper thickness of five µm on the uncoated side of each strip. After plating was completed the test strips were removed from the haring cell, rinsed with wafer, dried and the platers tape was removed from the test strips. The test strips were inserted at one end into screw clamps of the deposit stress analyzer. The internal stress of the copper deposit on the strips was determined to be 631 psi. The stress was determined using the equation S=U/3TxK, where S is stress in psi, U is number of increments of deflection on the calibrated scale, T is deposit thickness in inches and K is the test strip calibration constant. After the test strips aged for 2 days, the stress for each strip was determined to be 1578 psi.

An elongation test was also performed using industrial standard IPC-TM-650 methods. 75 µm thick copper film was plated on stainless steel panel at 3.8 ASD. The copper film was peeled off after plating and annealed for 4 hours at 125 °C. The pull test was done on the Instron pull tester 33R4464. Elongation for the copper from the bath was 11.8 %, and load at maximum tensile stress was 78 lbf. Although the ductility was at a high level, the internal stress exceeded 1000 psi. The results of the bath with the linear polyethylenimine were substantially the same as with the copper baths which excluded the branched polyethylenimine.

## Claims

1. An acid copper electroplating bath comprising one or more sources of copper ions, an electrolyte, one or more branched polyalkylenimines, one or more accelerators and one or more suppressors.

2. The acid copper electroplating bath of claim 1, wherein the one or more branched polyaklyleneimines have a formula: 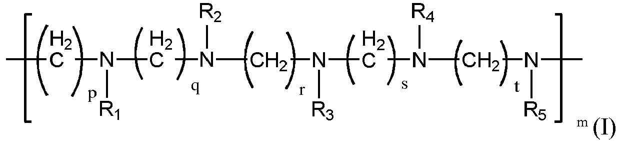 wherein R₁, R₂, R₃, R₄ and R₅ may be hydrogen or a moiety having a general formula: 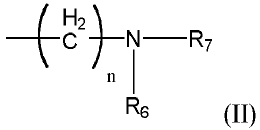 where R₆ and R₇ are the same or different and are hydrogen or a moiety having a general formula: 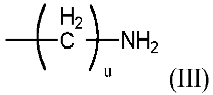 with the proviso that at least one of R₁, R₂, R₃, R₄ and R₅ is the moiety having formula (II) and n, p, q, r, s, t and u may be the same or different and are integers of 2 to 6 and m is an integer of 2 or greater.

3. The acid copper electroplating bath of claim 2, wherein the one or more branched polyalkylenimines are compounds having formula: 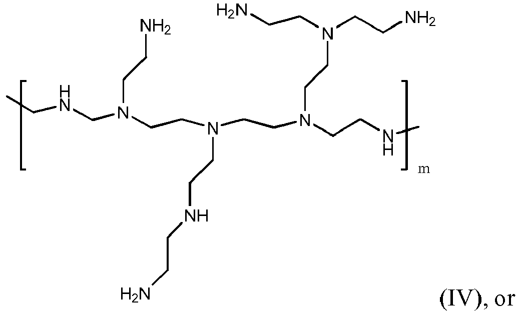 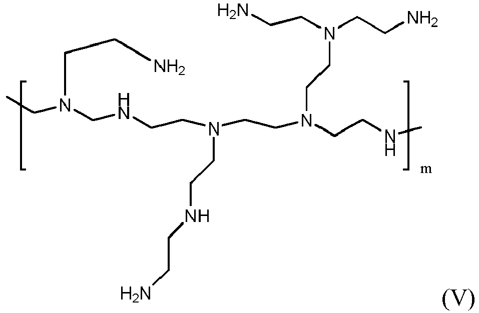 wherein m is an integer of 2 or greater.

4. The acid copper electroplating bath of claim 1, wherein the one or more branched polyalkylenimines are dendrimers.

5. The acid copper electroplating bath of claim 1, wherein the one or more accelerators are chosen from 3-mercapto-1-propane sulfonic acid, ethylenedithiodipropyl sulfonic acid, bis-(ω-sulfobutyl)-disulfide, methyl-(ω-sulfopropyl)-disulfide, N,N-dimethyldithiocarbamic acid (3-sulfopropyl) ester, (O-ethyldithiocarbonato)-S-(3-sulfopropyl)-ester, 3-[(amino-iminomethyl)-thiol]-1-propanesulfonic acid, 3-(2-benzylthiazolylthio)-1-propanesulfonic acid, bis-(sulfopropyl)-disulfide and alkali metal salts thereof.

6. The acid copper electroplating bath of claim 5, wherein the one or more accelerators are chosen from (O-ethyldithiocarbonato)-S-(3-sulfopropyl)-ester, 3-mercapto-1-propane sulfonic acid and alkali salts thereof.

7. A method comprises:
a) contacting a substrate with a copper electroplating bath comprising one or more sources of copper ions, an electrolyte, one or more branched polyalkylenimines, one or more accelerators and one or more suppressors; and
b) electroplating low internal stress high ductility copper on the substrate.

8. The method of claim 7, wherein the one or more branched polyalkylenimines have a formula: 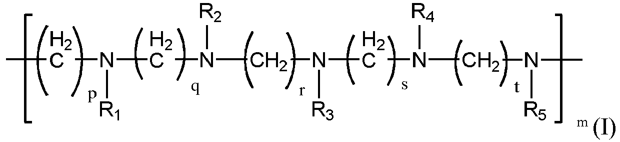 wherein R₁, R₂, R₃, R₄ and R₅ may be hydrogen or a moiety having a general formula: 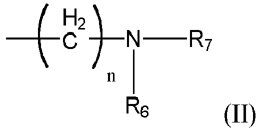 where R₆ and R₇ are the same or different and are hydrogen or a moiety having a general formula: 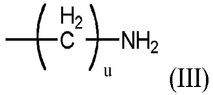 with the proviso that at least one of R₁, R₂, R₃, R₄ and R₅ is the moiety having formula (II) and n, p, q, r, s, t and u are the same or different and are integers of 2 to 6 and m is an integer of 2 or greater.

9. The method of claim 7, wherein the one or more accelerators are chosen from 3-mercaptopropane-1-sulfonic acid, ethylenedithiodipropyl sulfonic acid, bis-(ω-sulfobutyl)-disulfide, methyl-(ω-sulfopropyl)-disulfide, N,N-dimethyldithiocarbamic acid (3-sulfopropyl) ester, (O-ethyldithiocarbonato)-S-(3-sulfopropyl)-ester, 3-[(amino-iminomethyl)-thiol]-l-propanesulfonic acid, 3-(2-benzylthiazolylthio)-1-propanesulfonic acid, bis-(sulfopropyl)-disulfide and alkali metal salts thereof
